Europäisches Patentamt

European Patent Office

Office européen des brevets

(19)

(11)     EP 1 580 027 A2

(12)                    **EUROPEAN PATENT APPLICATION**

(43) Date of publication:
    **28.09.2005 Bulletin 2005/39**

(51) Int Cl.⁷: **B60B 3/06**, B60B 21/02

(21) Application number: **05006618.2**

(22) Date of filing: **24.03.2005**

(84) Designated Contracting States:
    **AT BE BG CH CY CZ DE DK EE ES FI FR GB GR
    HU IE IS IT LI LT LU MC NL PL PT RO SE SI SK TR**
    Designated Extension States:
    **AL BA HR LV MK YU**

(30) Priority: **25.03.2004 JP 2004089057**

(71) Applicants:
    • **ASAHI TEC CORPORATION**
      **Shizuoka-prefecture, 439-8651 (JP)**

    • **Bridgestone Corporation**
      **Tokyo 104-8340 (JP)**

(72) Inventors:
    • **Yamamoto, Masami, Asahi Tec Corporation
      Shizuoka-prefecture, 439-8651 (JP)**
    • **Sato, Hiroshi, Bridgestone Corporation
      Kodaira-shi Tokyo 187-8531 (JP)**

(74) Representative: **TBK-Patent
    Bavariaring 4-6
    80336 München (DE)**

(54)     **Vehicle wheel and manufacturing method of the same**

(57)     A vehicle wheel (1) includes a rim (2) for mounting a tire thereon and at least one hollow air chamber (3) provided inside the rim (2), and the rim (2) having the air chamber (3) is integrally cast so as to have the vehicle wheel (1) having the rim (2) with an excellent mechanical strength and achieving stable traveling.

FIG.1(a)

FIG.1(b)

**Description**

BACKGROUND OF THE INVENTION

1. Field of the Invention

The present invention relates to vehicle wheels and a manufacturing method therefor, and in particular relates to a vehicle wheel having at least one hollow air chamber inside a rim, which is excellent in the mechanical strength, so as to enable the wheel to stably travel and a method for simply manufacturing such a vehicle wheel with high accuracy and integrally forming the rim having at least one hollow air chamber therein.

2. Description of the Related Art

Recently, both drivability and cabin comfortableness have been demanded for automobiles, especially for luxury automobiles. Thus, various improved techniques have been developed for so-called underbody components such as a tire, a vehicle wheel, and a suspension. For example, an active control technique for the suspension, a rubber vibration insulator, and a tire structure have been improved.

The vehicle wheels have been improved in various manners. For example, in order to suppress tire-cavity resonant sound principally causing vehicle cabin noise, a vehicle wheel is disclosed wherein a sub air chamber is provided in a rim wheel for serving as a Helmholtz resonant sound-absorber by adjusting sizes of the sub air chamber and a communication hole (see JP-A-2002-79802, for example).

The rim wheel disclosed in JP-A-2002-79802 includes a rim, a plurality of cover members provided on an outer circumference surface of the rim, a plurality of sub air chambers provided between the rim and the cover members and divided by a plurality of partition walls provided at intervals in the circumferential direction, a concave well part provided in at least one of the rim and the cover members with its bottom portion located inwardly from a bead seat in the radial direction, and a communication part for communicating a tire main air chamber with the sub air chamber. The sub air chamber and the communication part constitute a Helmholtz resonant sound-absorber.

However, in the rim wheel disclosed in JP-A-2002-79802, the cover member and the partition wall constituting the sub air chamber are joined by welding, so that there has been a problem that it is difficult to ensure the mechanical strength of this welded portion strongly enough to stand vibration during vehicle traveling. When the cover member and the partition wall are joined by welding, the airtightness of the sub air chamber is required for having the sufficient resonant sound-absorbing effect, so that a very high-grade welding technique is needed. Hence, it is difficult to industrially manufacture this rim wheel in practice.

SUMMARY OF THE INVENTION

The present invention has been made in view of the problems described above, and it is an object of the invention to provide a vehicle wheel having at least one hollow air chamber inside a rim, which is excellent in the mechanical strength for mounting a tire thereon, so as to enable the wheel to stably travel and a method for simply manufacturing such a vehicle wheel with high accuracy by integrally forming the rim having at least one hollow air chamber therein.

The present invention provides a vehicle wheel and a manufacturing method of the vehicle wheel as follows:

(1) A vehicle wheel including a rim for mounting a tire thereon and at least one hollow air chamber formed inside the rim, wherein a rim having at least one air chamber is integrally cast with at least one air chamber (may be referred to as a first aspect of the invention below).
(2) The vehicle wheel of the item (1) wherein the rim includes at least two air chambers.
(3) The vehicle wheel of the item (1) or (2) wherein at least one air chamber includes one or more communication holes bored through the at least one air chamber and a surface of the rim adjacent to a tire, and resonant absorbing is enabled with the at least one air chamber and the communication hole.
(4) The vehicle wheel of any one of the items (1) to (3) wherein the at least one air chamber is made a part of an annular shape of the rim in its circumferential direction.
(5) The vehicle wheel of the item (3) or (4) wherein the communication hole is bored through the at least one air chamber at substantial center portion of the rim in its width direction.
(6) The vehicle wheel of any one of the items (3) to (5) wherein the communication hole is bored through the air chamber at substantial center portion of the rim in its circumferential direction.
(7) The vehicle wheel of any one of the items (3) to (6) wherein the relationship between the air chamber and the communication hole satisfies the following equation (1):

$$100 \leq \frac{C}{2\pi} \sqrt{\frac{S}{V(L + 0.8\sqrt{(S / N)})}} \leq 500 \qquad (1)$$

wherein character V represents the total volume of the air chamber (cm$^3$); S the total sectional area of the communication hole (cm$^2$); L the length of the communication hole (cm); N the number of the communication holes bored in one air chamber (pieces); and C the sonic speed (cm/second).
(8) The vehicle wheel of any one of the items (1) to (7) wherein the total volume of the air chambers formed inside the rim is 2 to 25% by volume of a space defined by a tire mounted on the rim and a surface of the rim adjacent to the tire.

(9) A manufacturing method of a vehicle wheel having a rim for mounting a tire thereon and at least one hollow air chamber formed inside the rim, the method including the steps of arranging a core with a predetermined shape at a position corresponding to a rim of a cavity shaped in vehicle wheel; and forming at least one hollow air chamber inside the rim by filling the cavity having the core provided therein with a molten or partially molten metal (may be referred to as a second aspect of the invention below).

(10) The manufacturing method of the item (9) further including the steps of providing a holding means having at least one retainer, which extends from a surface of the cavity, in the cavity; arranging the core in a state held by a holder of the holding means at a position corresponding to the rim of the cavity; and filling a cavity having the core provided therein with a molten or partially molten metal.

(11) The manufacturing method of the item (10) further including the steps of arranging at least the two cores at a position corresponding to the rim of the cavity in a state held by the holder of the holding means at two or more positions for each core; filling the cavity having the cores provided therein with a molten or partially molten metal so as to obtain a cast product having the cores and holding portions of the holders embedded therein; pulling out the holding portions of the holders of the holding means from the obtained cast product so as to form through holes passing from a surface of the cast product through the cores embedded inside the cast product; removing the cores out of the through holes by crushing the cores so as to obtain a hollow cast product with through holes and having at least two hollow air chambers formed inside the cast product so as to correspond to the shape of the core; sealing off the through holes of the obtained hollow cast product with the through holes so as to obtain a closed hollow cast product having the air chambers enclosed therein; boring one or more communication holes for each air chamber through the enclosed air chamber and a surface of the rim adjacent to a tire in the closed hollow cast product to obtain a vehicle wheel having at least two air chambers in the rim with one or more communication holes bored for each air chamber through the air chambers and the surface of the rim adjacent to the tire.

(12) The manufacturing method of any one of the items (9) to (11) wherein when the core is provided in the cavity, the core is made a part of an annular shape of the rim in its circumferential direction.

(13) The manufacturing method of the item (11) or (12) wherein the communication hole is bored through the surface of the rim adjacent to the tire and the air chamber at its substantial center portion in the width direction of the rim.

(14) The manufacturing method of any one of the items (11) to (13) wherein the communication hole is bored through the surface of the rim adjacent to the tire and the air chamber at its substantial center portion in the circumferential direction of the rim.

A vehicle wheel according to the present invention has at least one hollow air chamber provided inside a rim for mounting a tire thereon, and the rim with an excellent mechanical strength can achieve stable traveling. By a manufacturing method of a vehicle wheel according to the present invention, such a vehicle wheel can be simply manufactured integrally with the rim in high accuracy.

BRIEF DESCRIPTION OF THE DRAWINGS

Figs. 1(a) and 1(b) are drawings of a vehicle wheel according to the present invention (a first aspect), wherein Fig. 1(a) is a plan view schematically showing a vehicle wheel according to an embodiment, and Fig. 1(b) is a sectional view of the vehicle wheel shown in Fig. 1(a) on the plane including the rotational axis of the vehicle wheel;

Fig. 2 is an enlarged sectional view of the vicinity of a rim of the vehicle wheel shown in Fig. 1(b);

Fig. 3 is an explanatory view schematically illustrating a casting process in manufacturing the vehicle wheel according to the present invention (the first aspect);

Fig. 4 is a partially enlarged sectional view of a hollow cast product with a through hole obtained by a manufacturing method of a vehicle wheel according to an embodiment of the present invention (a second aspect); and

Fig. 5 is a sectional view showing a process sealing the through hole of the hollow cast product with the through hole in the manufacturing method of the vehicle wheel according to the embodiment of the present invention (the second aspect).

DESCRIPTION OF THE PREFERRED EMBODIMENTS

A vehicle wheel and a manufacturing method thereof according to an embodiment of the present invention will be described below in detail with reference to the drawings. However, the present invention is not limited to these, so that various modifications and improvements may be made on the basis of knowledge of persons skilled in the art within the scope of the present invention.

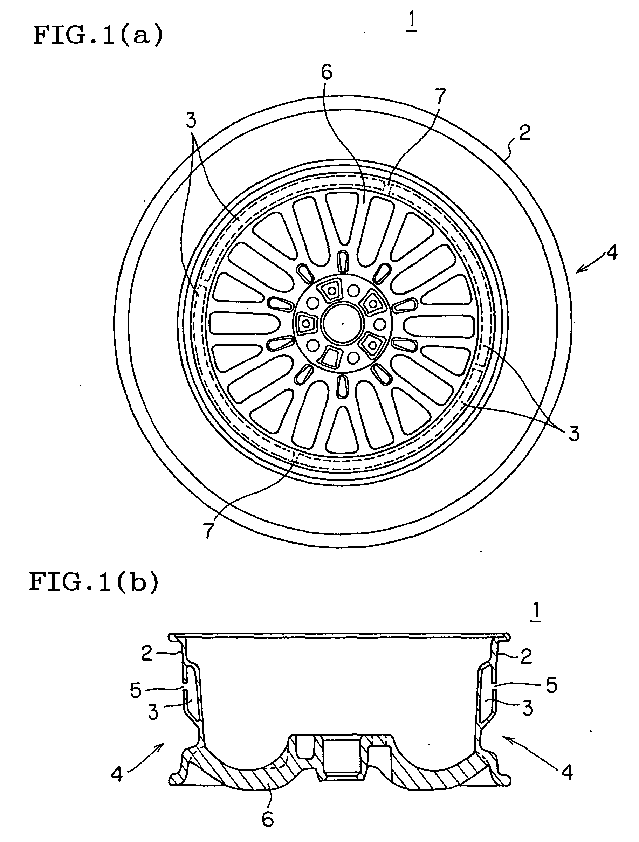

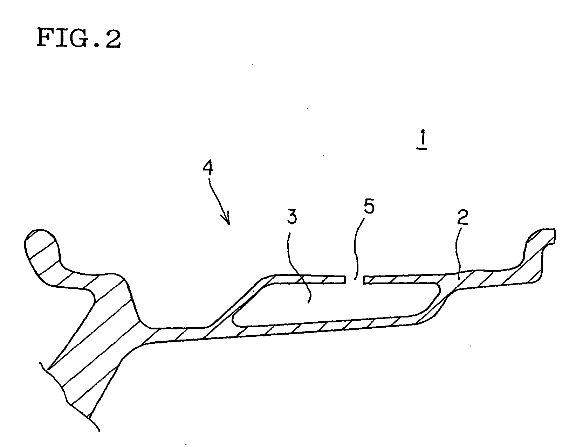

First, a vehicle wheel according to an embodiment of the present invention (a first aspect) will be specifically described. Fig. 1(a) is a plan view schematically showing the vehicle wheel according to the embodiment of the present invention. Fig. 1(b) is a sectional view of the vehicle wheel shown in Fig. 1(a) on the plane including its rotational axis. Fig. 2 is an enlarged sectional view of the vicinity of a rim of the vehicle wheel shown in Fig. 1(b). A vehicle wheel 1 shown in Figs. 1(a), 1(b), and 2 includes a rim 2 for mounting a tire and at least one hollow air chamber 3 provided within the rim 2, and the rim 2 having the air chamber 3 is integrally cast.

As mentioned above, since the vehicle wheel 1 includes the rim 2 for mounting a tire and at least one hollow air chamber 3 provided within the rim 2, and the rim 2 is integrally cast with at least one air chamber, the rim 2 is excellent in the mechanical strength and balance, achieving stable traveling. Different from conventional vehicle wheels having an air chamber separately welded, the vehicle wheel 1 can also create a form with priority on design because the design is not influenced by the structure. Although the rim 2 has the air chamber 3 inside, in the vehicle wheel 1 according to the embodiment, workability in assembling the rim to a tire cannot be reduced, facilitating the tire to be mounted.

In the vehicle wheel 1 according to the embodiment, it is preferable that the rim 2 have two or more air chambers 3. In such a case, the vehicle wheel 1 can be well-balanced while the casting is simplified. Since in the vehicle wheel 1 according to the embodiment, the rim 2 is integrally cast as mentioned above, especially when two or more air chambers 3 are provided, the respective air chambers 3 can be substantially evenly formed.

In the vehicle wheel 1 according to the embodiment, it is preferable that at least one air chamber 3 have one or more communication holes 5 communicating the air chamber 3 with a surface of the rim 2 adjacent to a tire so that resonance absorption be enabled with the air chamber 3 and the communication hole 5. When a vehicle travels with tires mounted on conventional vehicle wheels, cavity resonant sound is generated by a cavity formed between the vehicle wheel and the rim, causing vehicle cabin noise. As described above, since the vehicle wheel 1 has a Helmholtz resonant sound-absorber configured with the air chamber 3 and the communication hole 5, the cavity resonant sound during traveling can be reduced by the resonance absorption.

At least one air chamber 3 may have the communication hole 5; however, in the vehicle wheel 1 according to the embodiment, it is preferable that each of the entire air chambers 3 have one or more communication holes 5 when the wheel has two or more air chambers 3. By such a structure, the resonant sound-absorbing effect mentioned above can be further increased.

According to the embodiment, it is preferable that the air chamber 3 be made a part of an annular shape of the rim 2 in the circumferential direction. Specifically, as shown in Fig. 1(a), it is preferable that an annular hollow space be divided with walls 7, each having a predetermined thickness, at a plurality of positions so as to form two or more air chambers 3. By such a structure, with these air chambers 3, the effect of suppressing the cavity resonant sound and vibration during traveling, i.e., the resonant sound-absorbing effect, is excellently taken while the stability of the vehicle wheel 1 according to the embodiment can be improved.

In the vehicle wheel 1, when the communication hole 5 is bored through the air chamber 3, it is preferable that the communication hole 5 be bored through the rim 2 at its substantial center portion in the width direction. It is also preferable that the communication hole 5 be bored through the air chamber 3 at its substantial center portion in the circumferential direction of the rim 2. In such a manner, the width and the circumference of the rim 2 are symmetrical about the communication hole 5, so that the effect of suppressing the cavity resonant sound and vibration during traveling and the stability of the vehicle wheel 1 can be further improved.

Furthermore, when the communication hole 5 is bored through the air chamber 3 in the vehicle wheel 1 according to the embodiment, in order to have the excellent resonant sound-absorbing effect with the air chamber 3 and the communication hole 5, it is preferable that the relationship between the air chamber 3 and the communication hole 5 satisfy the following equation (1):

$$100 \leq \frac{C}{2\pi} \sqrt{\frac{S}{V(L + 0.8\sqrt{(S / N)})}} \leq 500 \qquad (1)$$

wherein character V represents the total volume of the air chamber 3 ($cm^3$); S the total sectional area of the communication hole 5 ($cm^2$) ; L the length of the communication hole 5 (cm); N the number of the communication holes 5 bored in one air chamber 3 (pieces); and C the sonic speed (cm/second).

By relating the air chamber 3 to the communication hole 5 so as to satisfy the equation (1), the resonance frequency can be established to have substantially the same value as that of the cavity resonant sound frequency of a tire mounted on the vehicle wheel 1 according to the embodiment, thereby reducing the tire-cavity resonant sound. In addition, in the vehicle wheel 1 according to the embodiment, the number of the air chambers 3 is two or more; when the number of the communication holes 5 for each air chamber 3 is different, character N in the equation (1) denotes the average number of the communication holes 5 bored in one air chamber 3.

In the vehicle wheel 1 according to the embodiment, it is also preferable that the total volume of the air chambers 3 inside the rim 2 be 2 to 25% by volume of a space defined by a tire mounted on the vehicle wheel 1 and a surface 4 of the rim 2 adjacent to the tire, and further preferably be 3 to 15% by volume. If the total volume is less than 2% by volume, comfortable riding during driving and the resonant sound-absorbing effect may be reduced while if it is more than 25% by volume, during the resonant absorbing, the spring constant may be reduced with low frequencies, decreasing damping capacity.

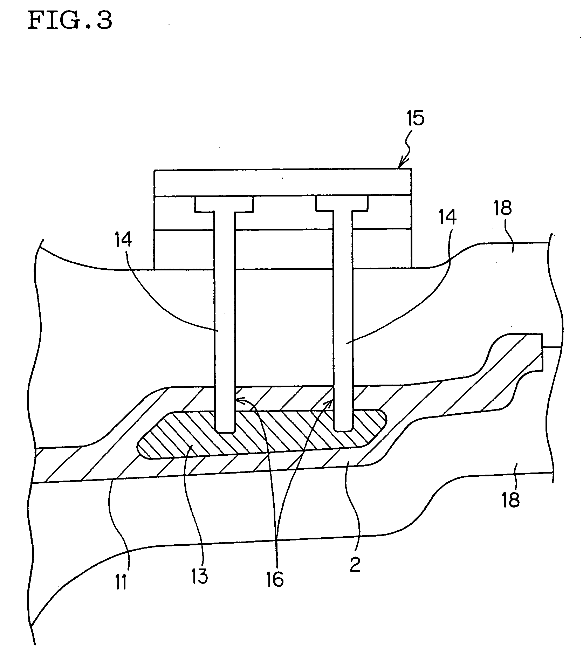

For manufacturing the vehicle wheel 1 according to the embodiment, as shown in Fig. 3, it can be integrally cast by arranging a core 13 at a position corresponding to the rim 2 of a cavity 11 shaped in a predetermined vehicle wheel so as to fill the cavity 11 having the core 13 provided therein with a molten or partially molten metal. Fig. 3 is an explanatory view schematically showing the casting process during the manufacturing of the vehicle wheel 1 according to the embodiment. Using the core 13 during the casting in such a manner further improves the mechanical strength of the rim 2, as shown in Fig. 1(a), and also increases the stability in shape of the air chamber 3. The casting method shown in Fig. 3 will be more specifically described when a manufacturing method of a vehicle wheel according to a second aspect of the present invention is described.

The vehicle wheel 1 according to the embodiment, as shown in Figs. 1(a) and 1(b), is also provided with a disc 6 for attaching the vehicle wheel 1 to a vehicle by holding the rim 2 at the outer boundary of the disc 6. The disc 6 may be preferably the same as that used in known vehicle wheels.

In the vehicle wheel 1 according to the embodiment, in order to further improve the resonant sound-absorbing effect described above, it is preferable that the number of the air chambers 3 be three or more, more preferably four or more, and especially preferably five or more. In these cases, the size of the respective air chambers 3 may be substantially the same or different.

In the vehicle wheel 1 according to the embodiment, materials for use in the rim 2 and the disc 6 are not limited in particular; however, they may preferably be a light alloy as a principal ingredient because of its mechanical strength and the light weight required for the vehicle wheel 1. Specifically, the principal ingredient may be preferably an aluminum alloy, or a magnesium alloy. According to the embodiment, the principal ingredient means an ingredient with 80% or more of the entire vehicle wheel 1 by mass.

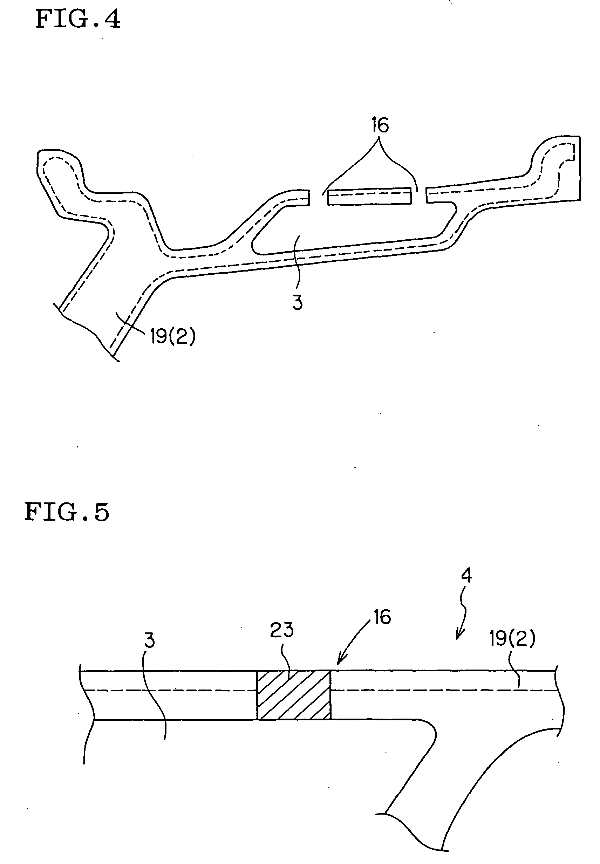

Next, an embodiment of a manufacturing method of a vehicle wheel according to the present invention (a second aspect of the present invention) will be described. The manufacturing method according to the embodiment is for manufacturing the vehicle wheel 1 having the rim 2 for mounting a tire and the hollow air chamber 3 provided within the rim 2 as shown in Figs. 1(a), 1(b), and 2. In the manufacturing method of the vehicle wheel 1, as shown in Figs. 3 and 4, the core 13 with a predetermined shape is provided at a position corresponding to the rim 2 (see Fig. 1(a)) of the cavity 11 shaped in the vehicle wheel 1 (see Fig. 1(a)) so as to form the hollow air chamber 3 (see Fig. 1(a)) inside the rim 2 (see Fig. 1(a)) by filling the cavity 11 having the core 13 provided therein with a molten or partially molten metal.

By such a method, the vehicle wheel 1 shown in Fig. 1(a) can be simply manufactured with high accuracy. The rim 2 of the vehicle wheel 1 obtained especially by integrally casting it can be improved in mechanical strength.

In the manufacturing method according to the embodiment of the vehicle wheel, as shown in Fig. 3, it is preferable that the cavity 11 be provided with holding means 15 provided to have at least one holder 14 extending from the surface of the cavity 11; the core 13 with a predetermined shape be provided in a state held by the holder 14 of the holding means 15 at a position corresponding to the rim 2 of the cavity 11; and the cavity 11 having the core 13 provided therein be filled with a molten or partially molten metal. The shape of the holder 14 is not especially limited; however, as shown in Fig. 3, a bar-like member capable of sticking the core 13 is preferable. The shape of the holder 14 may also preferably be a plate shape, a wedge shape, a block shape, or a spherical shape.

The manufacturing method according to the embodiment of a vehicle wheel is for manufacturing the vehicle wheel 1 (see Fig. 1(a)) having the hollow air chamber 3 (see Fig. 1(a)) provided within the rim 2 (see Fig. 1(a)). In manufacturing the vehicle wheel 1 having at least two air chambers 3, each air chamber 3 having one or more communication holes 5 bored through the surface 4 of the rim 2 adjacent to a tire and the air chamber 3, as shown Figs. 1(a) and 1(b): at least two cores 13 are provided at positions corresponding to the rim 2 of the cavity 11 in a state held by the holder 14 of the holding means 15 at two or more positions for each core 13; the cavity 11 having each core 13 provided therein is filled with a molten or partially molten metal so as to obtain a cast product 12 having the core 13 and a holding portion of the holder 14 embedded therein; the holding portion is pulled out of the obtained cast product 12 to form a through hole 16 passing from the surface of the cast product 12 through the core 13 embedded inside the cast product 12; the core 13 is isolated from the through hole 16 by crushing the core 13 so as to obtain a hollow cast product 19 (Fig. 4) with a through hole and having at least two hollow air chambers 3 formed inside the cast product 12 so as to correspond to the shape of the core 13 (see Fig. 3); and as shown in Fig. 5, the through hole 16 of the obtained hollow cast product 19 is sealed so as to obtain a closed hollow cast product 20 having the air chamber 3 enclosed therein; one or more communication holes 5 (see Fig. 2) are bored for each air chamber 3 through the enclosed air chamber 3 and the surface 4 adjacent to a tire (see Fig. 2) of the rim 2 (see Fig. 2) of the obtained closed hollow cast product 20, so that it is preferable to manufacture the vehicle wheel 1 with the rim 2 having at least two air chambers 3 provided inside and having one or more communication holes 5 bored for each air chamber 3 through the air chamber 3 and the surface 4 adjacent to a tire of the rim 2.

Fig. 4 is a partially enlarged sectional view of the hollow cast product with the through hole obtained in the manufacturing method according to the embodiment of a vehicle wheel. Fig. 5 is a sectional view showing a process sealing the through hole of the hollow cast product with the through hole. In addition, dotted lines in Figs. 4 and 5 show a shape of the vehicle wheel 1 (see Fig. 1(b)) as a final product.

The manufacturing method of the vehicle wheel will be described below further specifically for each process with reference to Figs. 3 to 5. First, as shown in Fig. 3, the core 13 with a predetermined shape is provided at a position corresponding to the rim 2 of the cavity 11 being equivalent to the vehicle wheel 1 (see Fig. 1(a)) in a state held by the holder 14 of the holding means 15 at two or more positions for each core 13, and the cavity 11 having the core 13 provided therein is filled with a molten or partially molten metal so as to obtain the cast product 12 having the core 13 and the holding portion of the holder 14 embedded therein. The cavity 11 is made of a metal mold 18.

The core 13 mentioned above is for forming the air chamber 3 of the vehicle wheel 1, and it corresponds to the shape of the air chamber 3. A material for use in the core 13 shown in Fig. 3 is not limited so that conventionally known materials may be preferably used.

The holding means 15 preferably used in the manufacturing method of the vehicle wheel according to the embodiment includes at least two bar-like holders 14 extending from the surface of the cavity 11 so as to hold the core 13 by sticking it at two or more positions with end extremities of the two holders 14. By holding one core 13 at two or more positions in such a manner, the core 13 is stably held while being facilitated to be put out of the cast product 12. It is preferable that the holding means 15 be connected to a cylinder for driving so that ends of the two holders 14 can penetrate the metal mold 18 so as to put in and out the cavity 11. Also, the holder 14 of the holding means 15 may be a core print for holding the core 13.

The metal mold 18 used in the manufacturing method of the vehicle wheel according to the embodiment may be preferably conventional known molds for casting; however, it is preferable that the holder 14 of the holding means 15 be provided as mentioned above. The casting method is not especially limited so that gravity casting and low pressure die casting may be used, for example.

A molten or partially molten metal used for casting may preferably have a principal ingredient of a light alloy because of its mechanical strength and the light weight required for the vehicle wheel 1 (see Fig. 1 (a)). Specifically, the principal ingredient may be preferably an aluminum alloy, or a magnesium alloy.

In the manufacturing method according to the embodiment of the vehicle wheel, the number of the cores 13 provided at positions corresponding to the rim 2 of the cavity 11 is not especially limited; however, two or more cores 13 may be preferable as mentioned above. In this case, it is preferable that each core 13 be made a part of an annular shape of the rim 2 in the circumferential direction. By such a structure, the stability of the obtained vehicle wheel 1 (see Figs. 1(a) and 1(b)) can be improved.

When each core 13 is made a part of an annular shape of the rim 2 in the circumferential direction, it is preferable that the number of the cores 13 provided in the cavity 11 be three or more, more preferably four or more, and especially preferably five or more. In these cases, the crushed core 13 can be easily removed out as well as in the vehicle wheel 1 (see Figs. 1(a) and 1 (b)), the air chamber 3 molded with the core 13 suppresses the vehicle vibration during driving, achieving stable traveling.

On the cast product 12 obtained by casting, a finishing such as deburring, heat treatment such as solid solution treatment and aging treatment, strain relieving, and shot blasting may be carried out.

Then, the holding portion of the holder 14 is pulled out of the cast product 12 obtained in such a manner to form the through hole 16 passing from the surface of the cast product 12 through the core 13 embedded inside the cast product 12. Then, the core 13 is isolated from the through hole 16 by crushing the core 13 embedded in the cast product 12 so as to obtain the hollow cast product 19 (Fig. 4) with the through hole and having at least two hollow air chambers 3 formed inside the cast product 12 so as to correspond to the shape of the core 13 (see Fig. 3).

As shown in Fig. 3, in the termination stage of the casting, the holding portion of the holder 14 is embedded in the obtained cast product 12. By pulling the holding portion out of the cast product 12, the through hole 16 is obtained with a shape corresponding to that of the embedded holder 14. In the manufacturing method of the vehicle wheel according to the embodiment, since one core 13 is held with two or more bar-like holders 14, two or more through holes 16 are formed for one core 13.

After the through hole 16 is formed in such a manner, the core 13 embedded in the cast product 12 is crushed and taken out through the through hole 16. For crushing the core 13, the vibration of a vibrator may be used. For taking out the crushed material from core 13, from one of the two or more through holes 16, high pressure air may be induced so as to forcedly exhaust the air out of the other through hole 16. As far as the material for core is concerned, any conventional material such as sand, or the like can be illustrated. By machining the surface of the hollow cast product 19 with through hole, the vehicle wheel 1 (see Fig. 1(a)) having the hollow air chamber 3 (see Fig. 1(a)) formed inside the rim 2 (see Fig. 1(a)) can be manufactured.

In the manufacturing method of the vehicle wheel according to the embodiment, as shown in Fig. 5, the through hole 16 of the obtained hollow cast product 19 may be sealed when necessary so as to obtain the closed hollow cast product 20 having the air chamber 3 enclosed therein. When the through hole 16 of the obtained hollow cast product 19 is sealed in such a manner, it is preferable that a hole-plugging member 23 with a shape corresponding to the through hole 16 be provided. The hole-plugging member 23 may preferably use a metallic member, an elastic rubber member, and a resin member.

In the manufacturing method of the vehicle wheel according to the embodiment, as shown in Fig. 2, one or more communication holes 5 communicating the air chamber 3 with a surface 4 of the rim 2 adjacent to a tire may be bored for each one air chamber of the obtained closed hollow cast product. By such a structure, the vehicle wheel 1 having at least two air chambers 3 provided inside the rim 2, each air chamber 3 having one or more communication holes 5 bored through the surface 4 of the rim 2 adjacent to a tire and the air chamber 3 as shown Figs. 1(a) and 1(b), can be simply manufactured with high accuracy.

In the manufacturing method of the vehicle wheel according to the embodiment, when the above-mentioned communication hole 5 is bored, it is preferable that the communication hole 5 be bored at the substantial center portion of the rim 2 in the width direction. It is also preferable that the communication hole 5 be bored through the air chamber 3 at the substantial center portion of the rim 2 in the circumferential direction. By such a structure, the stability of the obtained vehicle wheel 1 (see Fig. 1(a)) can be improved. The through hole 16 formed by pulling the holding portion of the holder 14 of the holding means 15 out of the cast product 12 shown in Fig. 3 may also be used as the communication hole 5 (see Fig. 2). Alternatively, although not shown, a separate member having a hole formed to have a predetermined shape in advance may be inserted into the through hole 16 (see Fig. 3) so as to use the hole of the separate member as the communication hole 5 (see Fig. 2).

The size of the core 13 shown in Fig. 3 and the size and the length of the section of the communication hole 5 shown in Fig. 2 are not especially limited so that they may be appropriately determined for the vehicle wheel 1 to be manufactured; however, they and a space (main air chamber) between a tire and the surface of the rim 2 during the tire is mounted in practice may be adjusted so as to add the resonant absorbing effect to the vehicle wheel 1.

In the manufacturing method of the vehicle wheel according to the embodiment, when the through hole 16 shown in Fig. 4 is sealed off to have the closed hollow cast product, and the communication hole 5 (see Fig. 2) is bored in the obtained closed hollow cast product, it is preferable that the closed hollow cast product be finished by machining before the boring so as to have a shape of the vehicle wheel 1 (see Fig. 1(a)) as a final product. Specifically, the finishing may include cutting on the surface of the closed hollow cast product, bolt hole boring, and valve hole boring. It is also preferable that the vehicle wheel 1 (see Fig. 1(a)) be painted before the communication hole 5 (see Fig. 2) is bored on the closed hollow cast product. By such processes, machining leavings and paint are effectively prevented from entering the air chamber 3 from the communication hole 5 (see Fig. 2).

As described above, by the manufacturing method of the vehicle wheel according to the embodiment, a vehicle wheel having a hollow air chamber formed inside a rim for mounting a tire thereon can be simply manufactured with high accuracy.

A manufacturing method of a vehicle wheel according to the present invention includes the steps of arranging a core with a predetermined shape at a position corresponding to a rim of a cavity; and forming a hollow air chamber inside the rim by filling the cavity having the core provided therein with a molten or partially molten metal, so that the vehicle wheel having the hollow air chamber formed inside the rim for mounting a tire thereon can be simply manufactured with high accuracy. In the vehicle wheel according to the present invention, the mechanical strength of the rim having the hollow air chamber is excellent so that a vehicle can travel stably.

A vehicle wheel includes a rim for mounting a tire thereon and at least one hollow air chamber provided inside the rim, and the rim having the air chamber is integrally cast so as to have the vehicle wheel having the rim with an excellent mechanical strength and achieving stable traveling.

**Claims**

1. A vehicle wheel comprising:

   a rim for mounting a tire thereon; and
   a hollow air chamber provided inside the rim,

   wherein the rim having at least one air chamber is integrally cast with the at least one air chamber.

2. The wheel according to Claim 1, wherein the rim comprises at least two air chambers.

3. The wheel according to Claim 1 or 2, wherein at least the one air chamber comprises one or more communication holes bored through the air chamber and a surface of the rim adjacent to a tire; the air chamber and the communication hole(s) being capable of absorbing resonance caused by driving.

**4.** The wheel according to any one of Claims 1 to 3, wherein the air chamber(s) is (are) made a part of an annular shape of the rim in its circumferential direction.

**5.** The wheel according to Claim 3 or 4, wherein the communication hole is bored through the air chamber(s) at substantial center portion of the rim in its width direction.

**6.** The wheel according to any one of Claims 3 to 5, wherein the communication hole is bored through the air chamber at substantial center portion of the rim in its circumferential direction.

**7.** The wheel according to any one of Claims 3 to 6, wherein the relationship between the air chamber (s) and the communication hole(s) satisfies the following equation (1):

$$100 \le \frac{C}{2\pi} \sqrt{\frac{S}{V(L + 0.8\sqrt{(S/N)})}} \le 500 \qquad (1)$$

wherein character V represents the total volume of the air chamber ($cm^3$); S the total sectional area of the communication hole ($cm^2$); L the length of the communication hole (cm); N the number of the communication holes bored in one air chamber (pieces); and C the sonic speed (cm/second).

**8.** The wheel according to any one of Claims 1 to 7, wherein the total volume of the air chambers provided inside the rim is 2 to 25% by volume of a space defined by a tire mounted on the rim and a surface of the rim adjacent to the tire.

**9.** A manufacturing method of a vehicle wheel having a rim for mounting a tire thereon and at least one hollow air chamber formed inside the rim, the method comprising the steps of:

providing a core with a predetermined shape at a position corresponding to the rim of a cavity shaped in the vehicle wheel; and
forming at least one hollow air chamber inside the rim by filling a cavity having the core provided therein with a molten or partially molten metal.

**10.** The method according to Claim 9, further comprising the steps of:

providing holding means having at least one holder, which extends from a surface of the cavity, in the cavity;
providing at least one core in a state held by the holder of the holding means at a position corresponding to the rim of the cavity; and
filling the cavity having the core provided therein with a molten or partially molten metal.

**11.** The method according to Claim 10, further comprising the steps of:

arranging at least two cores at a position corresponding to the rim of the cavity in a state held by the holders of the holding means at two or more positions for each core;
filling the cavity having the cores provided therein with the molten or partially molten metal so as to obtain a cast product having the cores and holding portions of the holders embedded therein;
pulling out the holding portions of the holders of the holding means from the obtained cast product so as to form through holes passing from a surface of the cast product through the cores embedded inside the cast product;
removing the cores out of the through holes by crushing the cores so as to obtain a hollow cast product with through holes and having at least two hollow air chambers formed inside the cast product so as to correspond to the shape of the core;
sealing off the through holes of the obtained hollow cast product with the through holes so as to obtain a closed hollow cast product having the air chambers enclosed therein;
boring one or more communication holes for each air chamber through the enclosed air chamber and a surface of the rim adjacent to a tire in the closed hollow cast product so as to obtain vehicle wheel having have at least two air chambers in the rim with one or more communication holes bored for each air chamber through the air chambers and the surface of the rim adjacent to the tire.

**12.** The method according to any one of Claims 9 to 11, wherein when the core is provided in the cavity, the core is made a part of an annular shape of the rim in its circumferential direction.

**13.** The method according to Claim 11 or 12, wherein the communication hole is bored through the surface of the rim adjacent to the tire and the air chamber at its substantial center portion in the width direction of the rim.

**14.** The method according to any one of Claims 11 to 13, wherein the communication hole is bored through the surface of the rim adjacent to the tire and the air chamber at its substantial center portion in the circumferential direction of the rim.

FIG.1(a)

FIG.1(b)

EP 1 580 027 A2

FIG.2

11

EP 1 580 027 A2

FIG.3

12

FIG.4

16

19(2)

3

FIG.5

4

3       23      16      19(2)